# EUROPEAN PATENT APPLICATION

(11) **EP 4 765 924 A1**
(43) Date of publication of application: **24.06.2026**
(21) Application number: 23948900.8
(22) Date of filing: 17.08.2023
(51) Int. Cl.: H04W 24/02

(54) **CARRIER MEASUREMENT METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2023/113627
(87) International publication number: WO 2025/035473

(57) **Abstract**

The present disclosure relates to a carrier measurement method, a terminal, a network device, and a storage medium. The carrier measurement method is executed by a terminal, and comprises: performing measurements on carriers of different types according to a first measurement mode, so as to obtain measurement results, wherein the carriers of different types are located in the same frequency band, the first measurement mode comprises performing measurement on a carrier of a first type among the carries of different types, and the measurement result of the carrier of the first type is used for determining measurement results of carriers other than the carrier of the first type or for performing measurement on the carriers other than the carrier of the first type according to a delay parameter, the delay parameter being used for indicating a delay requirement for performing measurement on the carriers, and the delay parameter being less than an agreed value in a communication protocol. In the embodiments, the measurement delay of measurement performed on carriers of different types is reduced, and measurement of carriers in the same frequency band is enhanced, and thus delay requirements for when measurement is performed can be effectively reduced, thereby improving the measurement efficiency and ensuring the communication reliability.

## Description

### TECHNICAL FIELD

The present disclosure relates to the field of communication technology, and in particular to a carrier measurement method, terminal, network device, and storage medium.

### BACKGROUND

With the rapid development of mobile communication technology, the terminal will measure newly detected cells and obtain the measurement result. However, the delay of the terminal when performing cell measurement is affected by a variety of conditions.

### SUMMARY

This disclosure solves the problem of long measurement delay, ensuring that by measuring the first type of carrier among multiple types or by reducing the number of sampling points, the measurement delay for measuring different types of carriers is reduced, and the measurement of carriers in the same frequency band is enhanced, which can effectively reduce the delay requirement during measurement, thereby improving measurement efficiency and ensuring communication reliability.

This disclosure provides embodiments of a carrier measurement method, a terminal, a network device, and a storage medium.

According to a first aspect of the present disclosure, a carrier measurement method is provided, the method including:
performing measurement on different types of carriers according to a first measurement manner to obtain a measurement result;
where the different types of carriers are located in a same frequency band, and the first measurement manner includes measuring a first type of carrier among the different types of carriers; and
where the measurement result of the first type of carrier is used to determine the measurement result of a carrier other than the first type of carrier, or the carrier other than the first type of carrier is measured according to a delay parameter, where the delay parameter is used to indicate a delay requirement for carrier measurement, and the delay parameter is less than a value agreed upon in a communication protocol.

According to a second aspect of the present disclosure, a carrier measurement method is provided, the method including:
obtaining a measurement result obtained by a terminal measuring different types of carriers according to a first measurement manner, where the different types of carriers are located in a same frequency band, and the first measurement manner includes measuring a first type of carrier among the different types of carriers; and
where the measurement result of the first type of carrier is used to determine the measurement result of a carrier other than the first type of carrier, or the carrier other than the first type of carrier is measured according to a delay parameter, where the delay parameter is used to indicate a delay requirement for carrier measurement, and the delay parameter is less than a value agreed upon in a communication protocol.

According to a third aspect of the embodiments of this disclosure, a carrier measurement method is provided, the method including:
performing measurement on different types of carriers according to a first measurement manner to obtain a measurement result;
where the different types of carriers are located in a same frequency band, and the first measurement manner includes measuring a first type of carrier among the different types of carriers;
where the measurement result of the first type of carrier is used to determine the measurement result of a carrier other than the first type of carrier, or the carrier other than the first type of carrier is measured according to a delay parameter, where the delay parameter is used to indicate a delay requirement for carrier measurement, and the delay parameter is less than a value agreed upon in a communication protocol; and
acquiring, by a network device, the measurement result.

According to a fourth aspect of the embodiments of this disclosure, a terminal is provided, including:
a processing module, configured to perform measurement on different types of carriers according to a first measurement manner to obtain a measurement result;
where the different types of carriers are located in a same frequency band, and the first measurement manner includes measuring a first type of carrier among the different types of carriers, or, a number of sampling points of the carrier other than the first type of carrier is reduced.

According to a fifth aspect of the embodiments of this disclosure, a network device is provided, including:
a transceiver module, configured to obtain a measurement result obtained by a terminal measuring different types of carriers according to a first measurement manner,
where the different types of carriers are located in a same frequency band, and the first measurement manner includes measuring a first type of carrier among the different types of carriers; or, a number of sampling points of the carrier other than the first type of carrier is reduced.

According to a sixth aspect of the embodiments of this disclosure, a terminal is provided, including:
one or more processors;
where the terminal is configured to execute any of the methods described in the first aspect.

According to a seventh aspect of the embodiments of this disclosure, a network device is provided, including:
one or more processors;
where the network device is configured to execute any of the methods described in the second aspect.

According to an eighth aspect of the embodiments of this disclosure, a communication system is provided, including:
a terminal and a network device, where the terminal is configured to implement the carrier measurement method described in the first aspect, and the network device is configured to implement the carrier measurement method described in the second aspect.

According to a ninth aspect of the present disclosure, a storage medium is provided that stores instructions that, when executed on a communication device, cause the communication device to perform the method as described in any one of the first or second aspects.

### BRIEF DESCRIPTION OF THE DRAWINGS

The accompanying drawings described herein are provided to further illustrate the disclosed embodiments and form a part of this disclosure. The illustrative embodiments and descriptions thereof are intended to explain the disclosed embodiments and do not constitute an undue limitation of the disclosed embodiments. In the drawings:
FIG. 1 is a schematic diagram of the architecture of a communication system according to an embodiment of the present disclosure;
FIG. 2 is an interactive schematic diagram of a carrier measurement method according to an embodiment of the present disclosure;
FIG. 3A is a schematic flowchart illustrating a carrier measurement method according to an embodiment of the present disclosure;
FIG. 3B is a schematic flowchart illustrating a carrier measurement method according to an embodiment of the present disclosure;
FIG. 4A is a schematic flowchart illustrating a carrier measurement method according to an embodiment of the present disclosure;
FIG. 4B is a schematic flowchart illustrating a carrier measurement method according to an embodiment of the present disclosure;
FIG. 5 is a schematic flowchart illustrating a carrier measurement method according to an embodiment of the present disclosure;
FIG. 6 is a schematic flowchart illustrating a carrier measurement method according to an embodiment of the present disclosure;
FIG. 7A is a schematic diagram of the structure of the terminal proposed in an embodiment of this disclosure;
FIG. 7B is a schematic diagram of the structure of the network device proposed in an embodiment of this disclosure;
FIG. 8A is a schematic diagram of the structure of the communication device proposed in an embodiment of this disclosure;
FIG. 8B is a schematic diagram of the chip structure proposed in an embodiment of this disclosure.

### DETAILED DESCRIPTION

This disclosure provides a carrier measurement method, a terminal, and a storage medium.

In a first aspect, embodiments of this disclosure provide a carrier measurement method, the method including:
performing measurement on different types of carriers according to a first measurement manner to obtain a measurement result;
where the different types of carriers are located in a same frequency band, and the first measurement manner includes measuring a first type of carrier among the different types of carriers; and
where the measurement result of the first type of carrier is used to determine the measurement result of a carrier other than the first type of carrier, or the carrier other than the first type of carrier is measured according to a delay parameter, where the delay parameter is used to indicate a delay requirement for carrier measurement, and the delay parameter is less than a value agreed upon in a communication protocol.

In the above embodiments, by measuring the first type of carrier among multiple types or reducing the number of sampling points, the measurement delay for measuring different types of carriers is reduced, and the measurement of carriers in the same frequency band is enhanced. This can effectively reduce the delay requirements during measurement, thereby improving measurement efficiency and ensuring communication reliability.

In conjunction with some embodiments of the first aspect, in some embodiments, the delay parameter is determined based on a number of first sampling points.

In conjunction with some embodiments of the first aspect, in some embodiments, the different types of carriers are located in the same frequency band belonging to a FR2 band.

In conjunction with some embodiments of the first aspect, in some embodiments, the different types of carriers include at least two of the following:
a FR2 PSCC;
a FR2 PCC;
a FR2 SCC requiring neighbor cell measurement;
a FR2 SCC not requiring neighbor cell measurement;
an inter-frequency MO not requiring measurement gap in FR2; and
an inter-RAT MO not requiring measurement gap in FR2.

In conjunction with some embodiments of the first aspect, in some embodiments, performing measurement on different types of carriers according to the first measurement manner to obtain the measurement result includes:
for different types of carriers, performing measurement on the first type of carrier among the different types of carriers to obtain the measurement result of the first type of carrier, and the measurement result of the first type of carrier is used for the measurement results of the carrier other than the first type of carrier.

In the above embodiments, the measurement of the first type of carrier among different types of carriers is performed, and the measurement result of the first type of carrier is used as the measurement result of other types of carriers, thereby reducing the measurement delay, enhancing the measurement of other types of carriers, and saving measurement overhead.

In conjunction with some embodiments of the first aspect, in some embodiments, the method further includes:
determining a scaling factor for the first type of carrier based on the first type, and the scaling factor is used to determine a delay for measuring the first type of carrier.

In the above embodiments, the scaling factor of the first type of carrier can be determined according to the first type, and then the measurement delay of the first type of carrier can be determined based on the scaling factor, ensuring the accuracy of the determined scaling factor, thereby ensuring the accuracy of the measurement delay determined based on the scaling factor, and thus ensuring communication reliability.

In conjunction with some embodiments of the first aspect, in some embodiments, determining the scaling factor of the first type of carrier according to the first type includes:
determining the scaling factor for the first type of carrier based on the first type and a priority of the first type, where the scaling factor is determined based on a number of carriers belonging to the first type.

In the above embodiments, a scaling factor for the first type is determined based on the first type and the priority of the first type, and the scaling factor is also related to the number of carriers of the first type, so as to ensure the accuracy of the determined scaling factor, thereby ensuring the accuracy of the measurement delay determined based on the scaling factor, and thus ensuring communication reliability.

In conjunction with some embodiments of the first aspect, in some embodiments, the scaling factor does not take into account a carrier of a different type other than the first type.

In the above embodiments, other types of carriers are not included when determining the scaling factor, so that the measurement results of the first type of carrier can be used as the measurement results of other types of carriers, reducing measurement delay, enhancing the measurement of other types of carriers, and saving measurement overhead.

In conjunction with some embodiments of the first aspect, in some embodiments, performing measurement on different types of carriers according to the first measurement manner to obtain the measurement result includes:
determining the first type of carrier among the different types of carriers based on a current communication scenario of the terminal; and
performing measurement on the first type of carrier according to the first measurement manner to obtain the measurement result.

In the above embodiments, the first type of carrier can be determined based on the current communication scenario of the terminal, and then the measurement result can be obtained, ensuring the accuracy of the measurement result of the first type of carrier.

In conjunction with some embodiments of the first aspect, in some embodiments, the communication scenario includes at least one of the following:
a scenario of ED-DC;
a scenario of SA;
a scenario of NR-DC; and
a scenario of NE-DC.

In conjunction with some embodiments of the first aspect, in some embodiments, the method further includes:
sending first information to a network device, the first information being configured to indicate that the terminal supports performing measurement on the first type of carrier according to the first measurement manner.

In conjunction with some embodiments of the first aspect, in some embodiments, the method further includes:
receiving second information sent by a network device, the second information being configured to configure the different types of carriers.

In a second aspect, embodiments of this disclosure provide a carrier measurement method, the method including:
obtaining a measurement result, obtained by a terminal measuring different types of carriers according to a first measurement manner, where the different types of carriers are located in a same frequency band, and the first measurement manner includes measuring a first type of carrier among the different types of carriers; and
where the measurement result of the first type of carrier is used to determine the measurement result of the carrier other than the first type of carrier, or the carrier other than the first type of carrier is measured according to a delay parameter, where the delay parameter is used to indicate a delay requirement for carrier measurement, and the delay parameter is less than a value agreed upon in a communication protocol.

In conjunction with some embodiments of the first aspect, in some embodiments, the delay parameter is determined based on a number of first sampling points.

In conjunction with some embodiments of the first aspect, in some embodiments, the different types of carriers are located in the same frequency band belonging to a FR2 band.

In conjunction with some embodiments of the first aspect, in some embodiments, the different types of carriers include at least two of the following:
a FR2 PSCC;
a FR2 PCC;
a FR2 SCC requiring neighbor cell measurement;
a FR2 SCC not requiring neighbor cell measurement;
an inter-frequency MO not requiring measurement gap in FR2; and
an inter-RAT MO not requiring measurement gap in FR2.

In conjunction with some embodiments of the first aspect, in some embodiments, the measurement result is obtained by the terminal measuring the first type of carrier among the different types of carriers, and the measurement result of the first type of carrier is used for the measurement results of the carrier other than the first type of carrier.

In conjunction with some embodiments of the first aspect, in some embodiments, a scaling factor for the first type of carrier is determined based on the first type, and the scaling factor is used to determine a delay for measuring the first type of carrier.

In conjunction with some embodiments of the first aspect, in some embodiments, the scaling factor for the first type of carrier is determined based on the first type and a priority of the first type, where the scaling factor is determined based on a number of carriers belonging to the first type.

In conjunction with some embodiments of the first aspect, in some embodiments, the scaling factor does not take into account a carrier of a different type other than the first type.

In conjunction with some embodiments of the first aspect, in some embodiments, the measurement result is obtained by performing measurement on the first type of carrier according to the first measurement manner, and the first type of carrier among the different types of carriers is determined based on a current communication scenario of the terminal.

In conjunction with some embodiments of the first aspect, in some embodiments, the communication scenario includes at least one of the following:
a scenario of ED-DC;
a scenario of SA;
a scenario of NR-DC; and
a scenario of NE-DC.

In conjunction with some embodiments of the first aspect, in some embodiments, the method further includes:
receiving first information sent by the terminal, the first information being configured to indicate that the terminal supports performing measurement on the first type of carrier according to the first measurement manner.

In conjunction with some embodiments of the first aspect, in some embodiments, the method further includes:
sending second information to the terminal, the second information being configured to configure the different types of carriers.

In a third aspect, embodiments of this disclosure provide a carrier measurement method, the method including:
performing measurement on different types of carriers according to a first measurement manner to obtain a measurement result;
where the different types of carriers are located in a same frequency band, and the first measurement manner includes measuring a first type of carrier among the different types of carriers;
where the measurement result of the first type of carrier is used to determine the measurement result of a carrier other than the first type of carrier, or the carrier other than the first type of carrier is measured according to a delay parameter, where the delay parameter is used to indicate a delay requirement for carrier measurement, and the delay parameter is less than a value agreed upon in a communication protocol; and
acquiring, by a network device, the measurement result.

In a fourth aspect, embodiments of this disclosure provide a terminal, which includes at least one of a transceiver module and a processing module; where the terminal is used to execute optional implementations of the first and third aspects.

In a fifth aspect, embodiments of this disclosure provide a network device, which includes at least one of a transceiver module and a processing module; where the access network device is used to execute optional implementations of the second and third aspects.

In a sixth aspect, embodiments of this disclosure provide a terminal, including:
one or more processors;
where the terminal is used to execute the method described in any one of the first and third aspects.

In a seventh aspect, embodiments of this disclosure provide a network device, including:
one or more processors;
where the network device is used to perform the method described in any one of the second and third aspects.

In an eighth aspect, embodiments of this disclosure provide a storage medium storing first information, which, when executed on a communication device, causes the communication device to perform the method as described in any one of the first, second, and third aspects.

In a ninth aspect, embodiments of this disclosure provide a program product that, when executed by a communication device, causes the communication device to perform the method described in any of the first, second, and third aspects.

In a tenth aspect, embodiments of this disclosure provide a computer program that, when run on a communication device, causes the communication device to perform the methods described in any of the first, second, and third aspects.

In an eleventh aspect, embodiments of this disclosure provide a chip or chip system. The chip or chip system includes processing circuitry configured to perform the methods described in any of the first, second, and third aspects.

It is understood that the aforementioned terminals, storage medium, program products, computer programs, chips, or chip systems are all used to execute the methods proposed in the embodiments of this disclosure. Therefore, the beneficial effects they can achieve can be referred to the beneficial effects in the corresponding methods, and will not be repeated here.

This disclosed embodiment presents a carrier measurement method, a terminal, network device, and a storage medium. In some embodiments, the terms "carrier measurement method", "information processing method", and "measurement method" may be used interchangeably, the terms "communication device", "information processing device", and "indicating device" may be used interchangeably, and the terms "information processing system" and "communication system" may be used interchangeably.

The embodiments of the present disclosure are not exhaustive and are merely illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the alternative implementation methods in a certain embodiment can be arbitrarily combined; in addition, the embodiments can be arbitrarily combined. For example, some or all steps of different embodiments can be arbitrarily combined, and a certain embodiment can be arbitrarily combined with the alternative implementation methods of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular, such as "a", "an", "the", "above", "said", "foregoing", "this", etc., may mean "one and only one", or "one or more", "at least one", etc. For example, when articles such as "a", "an", or "the" in English are used in translation, the noun following the article may be understood as a singular expression or a plural expression.

In the embodiments of the present disclosure, "plurality" refers to two or more.

In some embodiments, the terms "at least one of", "at least one of", "at least one of", "one or more", "a plurality of", "multiple", etc. can be used interchangeably.

In the embodiments of the present disclosure, descriptions such as "at least one of A and B", "A and/or B", "in one case, A, in another case, B", or "in response to one case, A, in response to another case, B", can include the following technical solutions depending on the situation: in some embodiments, A (executing A independently of B); in some embodiments, B (executing B independently of A); in some embodiments, selecting between A and B (selectively executing A and B); and in some embodiments, A and B (executing both A and B). The above description also applies when there are multiple branches, such as A, B, and C.

In some embodiments, descriptions such as "A or B" can include the following technical solutions depending on the situation: in some embodiments, A (executing A independently of B); in some embodiments, B (executing B independently of A); and in some embodiments, selecting between A and B (selectively executing A and B). The above description also applies when there are multiple branches, such as A, B, and C.

The prefixes "first" and "second" in the embodiments of the present disclosure are only used to distinguish different description objects and do not constitute any restriction on the position, order, priority, quantity or content of the description objects. For the statement of the description object, please refer to the description in the context of the claims or embodiments, and no unnecessary restriction should be constituted due to the use of prefixes. For example, if the description object is a "field", the ordinal number before the "field" in the "first field" and the "second field" does not limit the position or order between the "fields". "First" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number and can be one or more. Taking "first device" as an example, the number of "devices" can be one or more. In addition, the objects modified by different prefixes can be the same or different. For example, if the description object is "device", then the "first device " and the "second device" can be the same device or different devices, and their types can be the same or different; for another example, if the description object is "information", then the "first information" and the "second information" can be the same information or different information, and their contents can be the same or different.

In some embodiments, "including A", "comprising A", "for indicating A", and "carrying A" can be interpreted as directly carrying A or indirectly indicating A.

In some embodiments, the terms "time/frequency", "time-frequency domain", etc., refer to the time domain and/or the frequency domain.

In some embodiments, terms such as "in response to ...", "in response to determining ...", "in the case of ...", "at the time of ...", "when ...", "if ...", "provided ...", etc. can be used interchangeably.

In some embodiments, terms such as "greater than", "greater than or equal to", "not smaller than", "more than", "more than or equal to", "not less than", "higher than", "higher than or equal to", "not lower than", and "above" can be replaced with each other, and terms such as "smaller than", "smaller than or equal to", "not greater than", "less than", "less than or equal to", "not more than", "lower than", "lower than or equal to", "not higher than", and "below" can be replaced with each other.

In some embodiments, apparatus and device can be interpreted as physical or virtual, and their names are not limited to the names described in the embodiments. In some cases, they may also be understood as "equipment", "device", "circuit", "network element", "node", "function", "unit", "section", "system", "network", "chip", "chip system", "entity", and "subject".

In some embodiments, "network" can be interpreted as devices included in the network, such as access network devices, core network devices, etc.

In some embodiments, the term such as "access network device (AN device)" can also be referred to as "radio access network device (RAN device)", "base station (BS)", "radio base station", "fixed station", and in some embodiment it can also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" and "bandwidth part (BWP)".

In some embodiments, the terms such as "terminal" or "terminal device" can be referred to as "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, and the like.

In some embodiments, obtaining data, information, etc. may comply with the laws and regulations of the country where the data is obtained.

In some embodiments, data, information, etc. may be obtained with the user's consent.

In addition, each element, each row, or each column in the table of the embodiment of the present disclosure can be implemented as an independent embodiment, and the combination of any elements, any rows, and any columns can also be implemented as an independent embodiment.

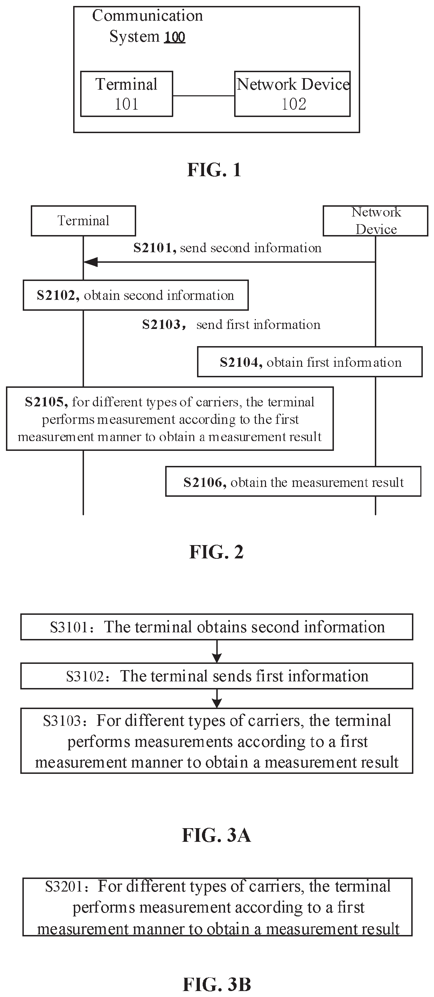

FIG. 1 is a schematic diagram of the architecture of a communication system according to an embodiment of the present disclosure. As shown in FIG. 1, the method provided in this embodiment can be applied to a communication system 100, which may include a terminal 101 and network device 102. It should be noted that the communication system 100 may also include other devices, and the present disclosure does not limit the devices included in the communication system 100.

In some embodiments, the terminal 101 includes for example, but is not limited to, at least one of the following: mobile phone, wearable device, Internet of Things device, car with communication function, smart car, tablet computer (Pad), computer with wireless transceiver function, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home.

In some embodiments, the network device 102 may include at least one of an access network device and a core network device.

In some embodiments, the access network device is, for example, a node or device that accesses a terminal to a wireless network. The access network device may include an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and at least one of an access node in a Wi-Fi system, but is not limited thereto.

In some embodiments, the technical solution of the present disclosure can be applied to the Open RAN architecture. In this case, the interfaces between or within the access network devices involved in the embodiments of the present disclosure can be transformed into internal interfaces of the Open RAN, and the processes and information interactions between these internal interfaces can be implemented through software or programs.

In some embodiments, the access network device may be formed of a centralized unit (CU) and a distributed unit (DU), where the CU may also be referred to as a control unit. A CU-DU structure may be used to separate the protocol layers of the access network device, with some functions of the protocol layers centrally controlled by the CU and some or all functions of the remaining protocol layers distributed in the DU, which is centrally controlled by the CU, but is not limited thereto.

In some embodiments, the core network device may be a single device including one or more network elements, or may be multiple devices or device groups, each including all or part of the aforementioned one or more network elements. The network elements may be virtual or physical. The core network may include, for example, at least one of an evolved packet core (EPC), a 5G core network (5GCN), or a next-generation core (NGC).

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. Those of ordinary skill in the art can know that with the evolution of the system architecture and the emergence of new service scenarios, the technical solution provided by the embodiment of the present disclosure is also applicable to similar technical problems.

The following embodiments of the present disclosure may be applied to the communication system 100 shown in FIG. 1, or a portion thereof, but are not limited thereto. The entities shown in FIG. 1 are illustrative only. The communication system may include all or a portion of the entities shown in FIG. 1, or may include other entities other than FIG. 1. The number and configuration of the entities may be arbitrary. The entities can be physical or virtual. The connections between the entities are illustrative only. The entities may be connected or disconnected, and the connections may be in any manner, including direct or indirect, wired or wireless.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New Radio Access Technology (RAT), New Radio (NR), New Radio Access (NX), Future Generation Radio Access (FX), Global System for Mobile communications (GSM^{®}), CDMA2000, Ultra Mobile Broadband (UMB), and the like. These standards include IEEE 802.11 (Wi-Fi^{®}), IEEE 802.16 (WiMAX^{®}), IEEE 802.20, ultra-wideband (UWB), Bluetooth^{®}, public land mobile network (PLMN) networks, device-to-device (D2D) systems, machine-to-machine (M2M) systems, Internet of Things (IoT) systems, vehicle-to-everything (V2X), systems utilizing other carrier measurement methods, and next-generation systems based on and extending these methods. In addition, a combination of multiple systems (for example, a combination of LTE or LTE-A and 5G, etc.) can also be applied.

In some embodiments, the terminal needs to perform mobility measurements on one or more measurement objects (MO) configured by the network device (MO corresponds to measuring neighboring cell signals and signals of other carriers), and report the measurement result to the network device so that the network device can determine the current communication status of the terminal and then perform mobility management on the terminal. Due to manufacturing costs and shape constraints, the terminal can only operate on one frequency at any given time, and at that time, the terminal can only perform measurements on the MO centered on that frequency.

The terminal can easily measure neighboring cell signals operating on the same frequency as the current operating point, simultaneously receiving and transmitting data within the serving cell. However, when performing measurements on different frequencies (inter-frequency neighboring cells) and other RATs (other wireless networks operating on 5G NR frequencies), communication (TX/RX) with the serving cell must be paused. The RF module needs to be adjusted to configure the frequency, and the connection with the serving cell is restored after a period of time. The time interval during which the terminal pauses communication with the serving cell to measure inter-frequency neighboring cells or other wireless neighboring cells is called the measurement gap.

In some embodiments, the network device configures multiple MOs for the terminal. Due to limitations in hardware and software capabilities, the number of measurements that the terminal can perform in parallel is limited. Once the number of MOs configured by the network device for the UE exceeds the terminal's capacity, the terminal must perform the measurements of each MO in a time-division manner.

For each MO measurement, time-division inevitably leads to an increase in the time required to collect the required measurement samples, which is reflected in the measurement performance metrics as a proportional increase in measurement delay. Here, the concept of carrier-specific scaling factor (CSSF) is introduced, that is, the original single-carrier (MO) delay metric is multiplied by a scaling factor CSSF.

For configuring multiple MOs that need to be measured based on MG, there may be multiple MOs competing for the MG occasion. In this case, the terminal needs to determine the scaling factor of each MO to determine the corresponding measurement requirements, such as the measurement interval in the time domain. In this case, the scaling factor for each MO#i is CSSF_{within_gap,i}.

For configuring multiple MOs that do not need to be measured based on MG, the measurement is performed based on SMTC. In this case, there may be multiple MOs competing for the SMTC occasion. In this case, the terminal also needs to determine the scaling factor of each MO to determine the corresponding measurement requirements, such as the measurement interval in the time domain. The scaling factor for each MO#i is CSSF_{outside_gap,i}.

In some embodiments, the delay requirement = the configured number of MOs * the time required to obtain a specific MO measurement sample result. Optionally, the configured number of MOs is a scaling factor. Optionally, the scaling factor is a CSSF parameter. Optionally, the time required to obtain a specific MO measurement result is related to the product of the number of beam scans and the number of sampling points.

In some embodiments, the maximum value between the first and second values is taken as the delay requirement. Optionally, the first value is 600 ms, 800 ms, or other values. Optionally, the second value is the product of the third and fourth values and the scaling factor. The third value is a value rounded up based on the product of the delay parameter, the first parameter, the second parameter, and the third parameter. The fourth value is the SMTC (SSB Measurement Timing Configuration) period. It should be noted that in this case, the DRX (Discontinuous Reception) cycle is 0.

In some embodiments, the maximum value between the first and second values is taken as the delay requirement. Optionally, the first value is 600 ms, 800 ms, or other values. Optionally, the second value is the product of the third and fourth values and the scaling factor. The third value is a value rounded up based on the product of the delay parameter, the first parameter, the second parameter, and the third parameter. The fourth value is the maximum value between the SMTC period and the DRX cycle. It should be noted that the DRX cycle in this case is less than 320 ms.

In some embodiments, the delay requirement is the product of a third value, a fourth value, and a scaling factor. The third value is a value rounded up based on the product of the delay parameter, the first parameter, the second parameter, and the third parameter. The fourth value is the DRX cycle. It should be noted that the DRX cycle in this case is greater than 320 ms.

See Table 1

**Table 1**

| **DRX cycle** | **T_{PSS/SSS_sync_intra}** |
|---|---|
| No DRX | max(600ms, ceil(M_{pss/sss_sync_w/o_gaps} x K_{FR} x Kₚ x K_{layer1_measurement}) x SMTC period)^{Note 1} x CSSFᵢₙₜᵣₐ |
| DRX cycle≤ 320ms | max(600ms, ceil(1.5 X M_{pss/sss_sync_w/o_gaps} X K_{FR} x Kₚ x K_{layer1_measurement}) x max(SMTC period,DRX cycle)) x CSSFᵢₙₜᵣₐ |
| DRX cycle>320ms | ceil(M_{pss/sss_sync_w/o_gaps} x K_{FR} x Kₚ x K_{layer1_measurement}) x DRX cycle x CSSFᵢₙₜᵣₐ |
| NOTE 1: If different SMTC periodicities are configured for different cells, the SMTC period in the requirement is the one used by the cell being identified. | |
| NOTE 2: K_{FR} is a scaling factor depending on the frequency range and the SSB SCS. For FR2-1, KFR = 1. For FR2-2: KFR = 1 if the SCS of the SSB of the cell being detected is 120 kHz, KFR = 2 if the SCS of the SSB of the cell being detected is 480 kHz, and KFR = 3 if the SCS of the SSB of the cell being detected is 960 kHz. | |

M_{pss/sss_sync_w/o_gaps} is the delay parameter. In the embodiment, M_{pss/sss_sync_w/o_gaps}: For a UE supporting FR2-1 power class 1 or 5, M_{pss/sss_sync_w/o_gaps} =40. For a UE supporting power class 2, M_{pss/sss_sync_w/o_gaps} =24. For a UE supporting FR2-1 power class 3, M_{pss/sss_sync_w/o_gaps} =24. For a UE supporting FR2-1 power class 4, M_{pss/sss_sync_w/o_gaps} =24. For a UE supporting FR2-2 power class 1, M_{pss/sss_sync_w/o_gaps} = 60. For a UE supporting FR2-2 power class 2, M_{pss/sss_sync_w/o_gaps} = 36. For a UE supporting FR2-2 power class 3, M_{pss/sss_sync_w/o_gaps} = 36.

FIG. 2 is an interactive schematic diagram of a carrier measurement method according to an embodiment of the present disclosure. As shown in FIG. 2, the embodiments of the present disclosure relate to a carrier measurement method, which includes:

**Step S2101:** The network device sends second information.

In some embodiments, the terminal receives the second information. Alternatively, it can be understood that the terminal receives the second information sent by the network device.

In some embodiments, the network device sends the second information to the terminal.

In some embodiments, the second information is used to configure the different types of carriers. Alternatively, the second information is used to configure different types of carriers for the terminal. Alternatively, the second information includes/carries different types of carriers.

In some embodiments, the second information is used to send measurement configuration information from the network device to the terminal.

In some embodiments, the name of the second information is not limited. It may be, for example, configuration information, configuration instructions, or second instructions.

**Step S2102:** The terminal obtains the second information.

In some embodiments, the terminal receives the second information. In some embodiments, the terminal receives the second information sent by a network device. In some embodiments, the terminal obtains the second information using other methods.

In some embodiments, the terminal obtains the second information as defined by the protocol.

In some embodiments, the terminal obtains the second information from a higher layer.

In some embodiments, the terminal processes information to obtain the second information.

In some embodiments, step S2102 is omitted, and the terminal autonomously implements the function indicated by the second information, or the above function is default or preset.

**Step S2103:** The terminal sends first information.

In some embodiments, the network device receives the first information. In some embodiments, the network device receives the first information sent by the terminal.

In some embodiments, the terminal sends the first information to the network device.

In some embodiments, the first information is used to indicate that the terminal supports measuring the carrier using the first measurement manner. Alternatively, the first information is used to indicate that the terminal has the capability to measure the carrier using the first measurement manner.

In some embodiments, the first measurement manner includes measuring a first type of carrier among the different types of carriers;
where the measurement result of the first type of carrier is used to determine the measurement result of a carrier other than the first type of carrier, or the carrier other than the first type of carrier is measured according to a delay parameter, where the delay parameter is used to indicate a delay requirement for carrier measurement, and the delay parameter is less than a value agreed upon in a communication protocol.

In some embodiments, the delay parameter is determined based on a first number of sample points. This can also be understood as measuring carriers other than the first type of carrier according to a first number of sample points, where the first number of sample points is less than a value agreed upon in the communication protocol.

In some embodiments, the first measurement manner includes measuring a first type of carrier among the different types of carriers, or reducing the number of sampling points for carriers other than the first type of carrier.

Optionally, the first type of carrier can be any type of carrier among different types of carriers. For example, if the different types of carriers include carriers of type 1, type 2, and type 3, the first type can be type 1, type 2, or type 3.

In some embodiments, the number of sampling points refers to the number of sample points required for the terminal to obtain a measurement result that meets the measurement accuracy requirements.

In some embodiments, reducing the number of sampling points for carriers other than the first type of carrier means reducing the number of sampling points required to measure the measurement results of other carriers.

In some embodiments, the name of the first measurement manner is not limited. It may be, for example, a measurement index, a parameter index, etc.

In some embodiments, the name of the first information is not limited in this disclosure. Examples include capability information, capability instructions, and indication information.

**Step S2104:** The network device obtains the first information.

In some embodiments, the network device receives the first information. In some embodiments, the network device receives the first information sent by the terminal.

In some embodiments, the network device can determine the capability of the terminal indicated by the first information by obtaining the first information. For example, if the first information is used to instruct the terminal to measure a first type of carrier among different types of carriers, the network device can determine based on the first information that the terminal has the capability to measure the first type of carrier among different types of carriers.

In some embodiments, for intra-band CA/DC, FR2 carriers are generally co-located, and the UE typically performs measurements for the PCC or PSCC and SCC(s) using the same RF front end. In this case, when the UE performs a measurement for a certain component carrier (CC), the measurement can be used to enhance the measurements of other CCs within the same band, thereby reducing measurement reporting delay.

**Step S2105:** For different types of carriers, the terminal performs measurement according to the first measurement manner to obtain a measurement result.

In some embodiments, the different types of carriers are located in the same frequency band. In this embodiment of the disclosure, the terminal measures the different types of carriers in the same frequency band according to a first measurement manner to obtain the measurement result.

In some embodiments, the same frequency band refers to the frequency band defined by the protocol, that is, if the carriers of different types are located in the same frequency band, it means that the frequency bands where the carriers of different types are located have the same frequency band number.

In some embodiments, the different types of carriers located in the same frequency band belong to the FR2 band. In some embodiments, different types of carriers located in the same frequency band means that the different types of carriers share the same frequency band. Alternatively, the different types of carriers have the same frequency. Alternatively, the different types of carriers occupy the same frequency point within the same frequency band.

In some embodiments, different types of carriers are located in the FR2 band. Optionally, the frequency range of the FR2 band is 24.25 GHz to 52.6 GHz. Optionally, the FR2 band includes multiple sub-bands. Co-band refers to carriers being located within the same sub-band.

In some embodiments, the terminal measures different types of carriers in the FR2 band and obtains the measurement result.

In some embodiments, the different carrier types include at least two of the following:
a FR2 PSCC (primary secondary component carrier);
a FR2 (frequency range 2) PCC (primary component carrier);
a FR2 SCC requiring neighbor cell measurement;
a FR2 SCC not requiring neighbor cell measurement;
an inter-frequency MO not requiring measurement gap in FR2; and
an inter-RAT MO not requiring measurement gap in FR2.

It should be noted that the embodiments disclosed herein use the carrier of the FR2 band as an example for illustration. In another embodiment, the terminal will also measure carriers of other frequency bands. Optionally, the other frequency band is the FR1 band. For example, it is the PCC of FR1 (frequency range 1); the PSCC (primary secondary component carrier) of FR1; inter-frequency MO not requiring measurement gap in FR1; and inter-RAT MO not requiring measurement gap in FR1.

In some embodiments, the first measurement manner includes measuring a first type of carrier among the different types of carriers, or reducing the number of sampling points for carriers other than the first type of carrier.

Optionally, the first measurement manner includes measuring a first type of carrier among different types of carriers. Alternatively, it can be understood that, for different types of carriers, the terminal measures a first type of carrier among different types of carriers.

Optionally, the first measurement manner includes reducing the number of sampling points for carriers other than the first type of carrier. Alternatively, it can be understood that for different types of carriers, the terminal reduces the number of sampling points for carriers other than the first type of carrier during measurement.

In some embodiments, for different types of carriers, a first type of carrier is measured to obtain a measurement result for the first type of carrier, and the measurement result of the first type of carrier is used as the measurement result for the carrier other than the first type of carrier. The use of the measurement result for the carrier other than the first type of carrier includes using the measurement result of the first type of carrier as the measurement reporting result for the carrier other than the first type of carrier.

Optionally, for different types of carriers, after obtaining the measurement result for the first type of carrier, the measurement result of the first type of carrier is used for the measurement result of the carrier other than the first type of carrier. Further, the carrier other than the first type of carrier refer to carriers of different types within the same frequency band that are of types other than the first type.

In some embodiments, when measuring the first type of carrier as described above, a scaling factor for the first type of carrier is determined based on the first type. In some embodiments, this scaling factor is used to determine the delay for measuring the first type of carrier.

In this embodiment of the disclosure, by determining the scaling factor of the first type, the terminal can use the measurement result of the first type as the measurement result of the carrier other than the first type.

In some embodiments, the terminal determines a scaling factor for the first type based on the first type and the priority of the first type, where the scaling factor is determined based on the number of carriers belonging to the first type.

In this embodiment of the disclosure, the priorities of different types of carriers are pre-determined, so the terminal can directly determine the scaling factor of the first type based on the first type and the priority of the first type.

Optionally, if the first type has the highest priority, or in other words, the priority of the first type is higher than that of other types, then the scaling factor of the first type is 1.

Optionally, if the priority of the first type is not the highest priority, or if the priority of the first type is lower than the priority of other types, then it is necessary to obtain the number of carriers of the first type and then determine the priority of the carriers of the first type.

In some embodiments, the scaling factor does not take into account carriers of a different type other than the first type. Alternatively, among the different types of carriers, the scaling factor does not take into account carriers of a different type other than the first type.

For example, in the EN-DC scenario, if the FR2 carrier to be measured is in the same frequency band as the FR2 PSCC, the scaling factor does not take into account the FR2 carrier to be measured; or, if the FR2 carrier to be measured is in the same frequency band as the FR2 SCC requiring neighbor cell measurement, the scaling factor does not take into account the FR2 carrier to be measured.

For example, in the SA scenario, if the FR2 carrier to be measured is in the same frequency band as the FR2 PCC, the scaling factor does not take into account the FR2 frequency band to be measured; otherwise, if the FR2 frequency band to be measured is in the same frequency band as the FR2 SCC requiring neighbor cell measurement, the scaling factor does not take into account the FR2 carrier to be measured.

For example, in an NR-DC scenario, if the FR2 carrier to be measured is in the same frequency band as the FR2 PSCC, the scaling factor does not take into account the FR2 carrier to be measured.

For example, in the NE-DC scenario, if the FR2 carrier to be measured is in the same frequency band as the FR2 PSCC, the scaling factor does not take into account the FR2 frequency band to be measured; otherwise, if the CC of the FR2 frequency band to be measured is in the same frequency band as the FR2 SCC requiring neighboring cell measurement, the scaling factor does not take into account the FR2 carrier to be measured.

In some embodiments, the terminal needs to determine the first type of carrier. The following describes how the terminal determines the first type of carrier.

In some embodiments, the terminal determines the first type of carrier among different types of carriers based on the current communication scenario of the terminal, and performs measurement according to the first measurement manner based on the first type of carrier to obtain the measurement result.

Optionally, the communication scenario includes at least one of the following:
an EN-DC (E-UTRAN New Radio Dual Connectivity, LTE and 5G dual connectivity) scenario;
an SA (standalone) scenario;
an NR -DC (New Radio-Dual Connectivity) scenario; and
an NE-DC (NR-E-UTRA Dual Connectivity, 5G and LTE dual connectivity) scenario.

In some embodiments, the EN-DC scenario includes at least one of the following:
an ENDC scenario with FR1 CA only;
an ENDC scenario with FR2 intra-band CA only;
an ENDC scenario with FR2 inter-band CA only;
an ENDC scenario with FR1+FR2 CA, while PSCell being in FR1; and
an ENDC scenario with FR1+FR2 CA, while PSCell being in FR2.

In some embodiments, the SA scenario includes at least one of the following:
an SA scenario with FR1 CA only;
an SA scenario with FR2 intra-band CA only;
an SA scenario with FR2 inter-band CA only;
an SA scenario with FR1+FR2 CA, while PCell being in FR1; and
an SA scenario with FR1+FR2 CA, while PCell being in FR2.

In some embodiments, the NR-DC scenario includes: an NR-DC scenario with PCell in FR1 and PSCell in FR2.

In some embodiments, the NE-DC scenario includes at least one of the following:
an NE-DC with FR1 CA only;
an NE-DC with FR2 intra-band CA only;
an NE-DC with FR2 inter-band CA only;
an NE-DC with FR1 and FR2 CA, while PCell being in FR1.

In some embodiments, the types of measurement objects may differ depending on the communication scenario.

Optionally, if the communication scenario is an ENDC scenario with FR1 CA only, then it includes FR1 PSCC, FR1 SCC, and inter-frequency MO not requiring MG.

Optionally, if the communication scenario is an ENDC scenario with FR2 intra-band CA only, then it includes FR2 PSCC, FR2 SCC not requiring neighbor cell measurement, and inter-frequency MO not requiring MG.

Optionally, if the communication scenario is an ENDC scenario with FR2 inter-band CA only, it includes FR2 PSCC, FR2 SCC requiring neighbor cell measurement, FR2 SCC not requiring neighbor cell measurement, and inter-frequency MO not requiring MG.

Optionally, if the communication scenario is an ENDC scenario with FR1+FR2 CA and PSCell in FR1, then it includes FR1 PSCC, FR1 SCC, FR2 SCC requiring neighbor cell measurement, FR2 SCC not requiring neighbor cell measurement, and inter-frequency MO not requiring MG.

Optionally, if the communication scenario is an ENDC scenario with FR1+FR2 CA and PSCell in FR2, then it includes FR1 SCC, FR2 PSCC, FR2 SCC not requiring neighbor cell measurement, and inter-frequency MO not requiring MG.

This disclosure uses the ENDC scenario as an example. For other scenarios, the different types of carriers included in the scenario will be determined according to the actual situation of the other scenario.

It should be noted that the first type is determined according to the communication scenario in this embodiment of the disclosure, which means that the scaling factor in this embodiment of the disclosure also needs to be determined according to the communication scenario.

In some embodiments, the terminal determines the scaling factor of the first type of carrier based on the communication scenario and the first type.

Furthermore, the terminal determines the scaling factor of the first type based on the communication scenario, the first type, and the priority of the first type.

In some embodiments, see Table 1 for an explanation of how the scaling factor is determined.

**Table 1**

| ENDC scenario | FR1 PSCC scaling factor | FR1 SCC scaling factor | FR2 PSCC scaling factor | scaling factor of FR2 SCC requiring neighbor cell measurement | scaling factor of FR2 SCC not requiring neighbor cell measurement | scaling factor of inter-frequency MO not requiring MG |
|---|---|---|---|---|---|---|
| ENDC scenario with FR1 CA only | 1+N_{PS CC_CSI RS} +N_{PSC C_CCA_ RSSI/CO} | N_{SCC_SSB} +Y+2x N_{SCC_CSIRS}+ N_{SCC_CCA_RSSI /CO} | N/A | N/A | N/A | N_{SCC_SSB} +Y+2x N_{SCC_CSIRS} |
| ENDC scenario with FR2 intra-band CA only | N/A | N/A | 1+N_{PSC C_CSIRS} | N/A | N_{SCC_SSB} +Y+2x N_{SCC_CSIRS} | N_{SCC_SSB} +Y+2x N_{SCC_CSIRS} |
| ENDC scenario with FR2 inter-band CA only | N/A | N/A | 1+N_{PSC C_CSIRS} | 2x(1+ N_{SCC_CSIRS_F R2_NCM}) ^{Note 3,5} | 2×( N_{SCC_SSB} +Y+2x N_{SCC_CSIRS} -1-N_{SCC_CSIRS_ FR2_NCM}) | 2×( N_{SCC_SSB} +Y+2x N_{SCC_CSIRS} -1-N_{SCC_CSIRS_ FR2_NCM}) |
| ENDC scenario with FR1+FR 2 CA, (PSCell in FR1) | 1+N_{P SCC_CS} IRS | 2×( N_{SCC_SS B} +Y+2xN_{SCC _CSIRS} -1-N_{SCC_CSIRS_ FR2_NCM}) | N/A | 2x(1+N_{SCC_ _CSIRS_FR2_NC M}) ^{Note 3} | 2×( N_{SCC_SSB} +Y+2x N_{SCC_CSIRS} -1-N_{SCC_CSIRS_ FR2_NCM}) | 2×( N_{SCC_SSB} +Y+2x N_{SCC_CSIRS} -1-N_{SCC_CSIRS_ FR2_NCM}) |
| ENDC scenario with FR1+FR 2 CA, (PSCell in FR2) | N/A | N_{SCC_S SB} +Y+2x N_{SCC_CSIRS} | 1 +N_{PSCC _CSIRS} | N/A | N_{SCC_SSB}+Y+2 x N_{SCC_CSIRS} | N_{SCC_SSB}+ Y+2x N_{SCC_CSIRS} |

It should be noted that if the first measurement manner includes reducing the number of sampling points for carriers other than the first type of carrier, the terminal can determine the scaling factor based on the different types of carriers. N_{SCC_SSB} or N_{SCC_CSIRS} both indicate the number of FR1 SCCs.

In other embodiments, the scaling factor can also be calculated based on layer 1 measurements, which in this case need to consider both CSI-RS based measurements and measurements on the band. Specifically, N_{PSCC_CSIRS} considers CSI-RS based measurements, and N_{PSCC_CCA_RSSI/CO} considers measurements on the unlicensed band. In cases involving different types of measurement objects, the N_{PSCC_CSIRS} and the N_{PSCC_CCA_RSSI/CO} need to be considered.

For example, referring to Table 2, the scaling factor is determined in the following ways:

**Table 2**

| ENDC scenario | *CSSF*_{outside_g ap,i} for FR1 PSCC | *CSSF*_{outside_ gap,i} for FR1 SCC | *CSSF*_{outsid e_gap,i} for FR2 PSCC | *CSSF*_{outside_ga p,i} of FR2 SCC requiring neighbor cell measurement | *CSSF*_{outside_ga p,i} for FR2 SCC not requiring neighbor cell measurement | *CSSF*_{outside_g ap,i} of inter-frequency MO not requiring MG |
|---|---|---|---|---|---|---|
| ENDC scenario with FR1 CA only | 1+N_{PSCC_CS IRS}+N_{PSCC_ CCA_RSSI/CO} | N_{SCC_SSB}+ Y+2xN_{SCC _CSIRS}+N_{SC C_CCA_RSSI/ CO} | N/A | N/A | N/A | N_{SCC_SSB} +Y+2xN_{SC C_CSIRS} |
| ENDC scenario with FR2 intra-band CA only | N/A | N/A | 1+N_{PSCC_ CSIRS} | N/A | N_{SCC_SSB} +Y+2x N_{SCC_CSIRS} | N_{SCC_SSB} +Y+2x N_{SCC_CSIRS} |
| ENDC scenario with FR2 inter-band CA only | N/A | N/A | 1+N_{PSCC_ CSIRS} | 2x(1+N_{SCC_ CSIRS_FR2_NC M}) ^{Note 3,5} | 2×( N_{SCC_SS B}+Y+2xN_{SC C_CSIRS} -1-N_{SCC_CSIRS_ FR2_NCM}) | 2×( N_{SCC_SS B}+Y+2xN_{S CC_CSIRS} -1-N_{SCC_CSIRS FR2_NCM}) |
| ENDC scenario with FR1+FR2 CA, (PSCell in FR1) | 1+N_{PSCC_CS IRS} | 2×(N_{SCC_S SB}+Y+2xN _{SCC_CSIRS}-1-N_{SCC_CSIRS _FR2_NCM}) | N/A | 2x(1+N_{SCC_ CSIRS_FR2_NC M}) ^{Note 3} | 2×( N_{SCC_SS B} +Y+2xN_{SCC _CSIRS}-1-N_{SCC_CSIRS_ FR2_NCM}) | 2×( N_{SCC_SS B} +Y+2xN_{SC C_CSIRS}-1-N_{SCC_CSIRS_ FR2_NCM}) |
| ENDC scenario with FR1+FR2 CA, (PSCell in FR2) | N/A | N_{SCC_SSB} +Y+2x N_{SCC_CSIRS} | 1+N_{PSCC_ CSIRS} | N/A | N_{SCC_SSB}+Y +2x N_{SCC_CSIRS} | N_{SCC_SSB}+ Y+2x N_{SCC_CSIRS} |

In the embodiment, Y represents the number of FR2 SCCs that do not require neighbor cell measurements.

For example, referring to Table 2, if the communication scenario is that there is FR1+FR2 CA and PSCell is in FR2, and different types of carriers include FR2 PSCC, FR2 SCC that requires neighbor cell measurement and inter-frequency MO that does not require MG in FR2, then the scaling factor does not consider FR2 SCC that does not require neighbor cell measurement and inter-frequency MO that does not require MG in FR2.

For example, if the communication scenario only has FR2 inter-band CA, and different types of carriers include FR2 PSCC, FR2 SCC that requires neighbor cell measurement, FR2 SCC that does not require neighbor cell measurement, and inter-frequency MO in FR2 that does not require MG, then the scaling factor does not include FR2 SCC that requires neighbor cell measurement, FR2 SCC that does not require neighbor cell measurement, and inter-frequency MO in FR2 that does not require MG.

In some embodiments, the method of reducing sampling points is illustrated by way of example.

In the EN-DC scenario, if the FR2 carrier to be measured and the FR2 PSCC are in the same frequency band, the measurement can be performed using a specific number of sampling points for the FR2 carrier; otherwise, if the FR2 carrier to be measured and the FR2 SCC not requiring neighboring cell measurement are in the same frequency band, the measurement can be performed using a specific number of sampling points for the FR2 carrier.

In the SA scenario, if the FR2 carrier to be measured and the FR2 PCC are in the same frequency band, then a specific number of sampling points can be used to perform the measurement for the FR2 carrier; otherwise, if the FR2 carrier to be measured and the FR2 SCC requiring neighboring cell measurement are in the same frequency band, then a specific number of sampling points can be used to perform the measurement for the FR2 carrier.

In the NR-DC scenario, if the FR2 carrier to be measured and the FR2 PSCC are in the same frequency band, then a specific number of sampling points can be used to perform the measurement for the FR2 carrier.

In the NE-DC scenario, if the FR2 carrier to be measured and the FR2 PSCC are in the same frequency band, the measurement can be performed using a specific number of sampling points for the FR2 carrier; otherwise, if the FR2 carrier to be measured and the FR2 SCC requiring neighboring cell measurement are in the same frequency band, the measurement can be performed using a specific number of sampling points for the FR2 carrier.

It should be noted that if the measurement is performed by reducing the number of sampling points in this embodiment, the scaling factor is obtained using the method in Table 2.

**Step S2106:** The network device obtains the measurement result.

In some embodiments, based on the determined CSSF value, the NR neighbor cell measurement delay index is determined, including the primary synchronization signal PSS or secondary synchronization signal SSS detection period, the time index detection period, and the measurement delay period.

In some embodiments, the names of information, etc., are not limited to the names described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" can be used interchangeably.

In some embodiments, the terms "uplink", "up link", and "physical uplink" can be used interchangeably, as can the terms "downlink", "down link", and "physical downlink", and the terms "sidelink", "side link", "sidelink communication", "side link communication", "directlink", "direct link", "direct communication", and "direct link communication" can be used interchangeably.

In some embodiments, "acquire", "obtain", "get", "receive", "transmit", "bidirectional transmission", and "send and/or receive" can be used interchangeably and can be interpreted as receiving from other entities, obtaining from protocols, obtaining from higher layers, obtaining through self-processing, or autonomous implementation, among other meanings.

In some embodiments, terms such as "send", "transmit", "report", "distribute", "transmission", "bidirectional transmission", "send and/or receive" can be used interchangeably.

In some embodiments, terms such as "moment", "time point", "time", and "time location" can be used interchangeably, as can terms such as "duration", "segment", "time window", "window", and "time" can be used interchangeably.

In some embodiments, terms such as "certain", "preset", "default", "set", "indicated", "a certain", "any", and "first" can be used interchangeably. "Certain A", "preset A", "default A", "set A", "indicated A", "a certain A", "any A", and "first A" can be interpreted as A pre-defined in a protocol or the like, or as A obtained through setting, configuration, or instruction, or as specific A, a certain A, any A, or first A, but are not limited thereto.

The carrier measurement method involved in the embodiments of this disclosure may include at least one of steps S2101 to S2106. For example, step S2101 can be implemented as an independent embodiment, step S2102 can be implemented as an independent embodiment, step S2103 can be implemented as an independent embodiment, step S2104 can be implemented as an independent embodiment, step S2105 can be implemented as an independent embodiment, step S2106 can be implemented as an independent embodiment, steps S2101 and S2102 can be implemented as an independent embodiment, steps S2103 and S2104 can be implemented as an independent embodiment, steps S2105 and S2106 can be implemented as an independent embodiment, steps S2101 and S2103 can be implemented as an independent embodiment, steps S2102 and S2104 can be implemented as an independent embodiment, steps S2101, S2103, and S2105 can be implemented as an independent embodiment, and steps S2102, S2104, and S2106 can be implemented as an independent embodiment, but is not limited thereto.

In some embodiments, steps S2103 and S2104 are optional, and one or more of these steps may be omitted or substituted in different embodiments.

In some embodiments, steps S2101 and S2102 are optional, and one or more of these steps may be omitted or substituted in different embodiments.

In some embodiments, steps S2102 and S2104 are optional, and one or more of these steps may be omitted or substituted in different embodiments.

In some embodiments, steps S2101 and S2103 are optional, and one or more of these steps may be omitted or substituted in different embodiments.

In some embodiments, steps S2101, S2103, and S2105 are optional, and one or more of these steps may be omitted or substituted in different embodiments.

In some embodiments, steps S2102, S2104, and S2106 are optional, and one or more of these steps may be omitted or substituted in different embodiments.

In some embodiments, other optional implementations described before or after the specification corresponding to FIG. 2 may be referred to.

FIG. 3A is a schematic flowchart illustrating a carrier measurement method according to an embodiment of the present disclosure, applied to a terminal. As shown in FIG. 3A, the present disclosure relates to a carrier measurement method, which includes:

**Step S3101:** The terminal obtains second information.

The optional implementation of step S3101 can be found in the optional implementation of step S2102 in FIG. 2, as well as other related parts in the embodiments involved in FIG. 2, which will not be repeated here.

**In step S3102:** The terminal sends first information.

The optional implementation of step S3102 can be found in the optional implementation of step S2103 in FIG. 2 and other related parts in the embodiments involved in FIG. 2, which will not be repeated here.

**Step S3103:** For different types of carriers, the terminal performs measurements according to a first measurement manner to obtain a measurement result.

The optional implementation of step S3103 can be found in the optional implementation of step S2105 in FIG. 2, as well as other related parts in the embodiments involved in FIG. 2, which will not be repeated here.

The carrier measurement method disclosed herein may include at least one of steps S3101 to S3103. For example, step S3101 may be implemented as an independent embodiment, step S3102 may be implemented as an independent embodiment, and step S3103 may be implemented as an independent embodiment, but is not limited thereto.

In some embodiments, step S3101 is optional, step S3102 is optional, and step S3102 is optional, and one or more of these steps may be omitted or substituted in different embodiments. However, this is not a limitation.

FIG. 3B is a flowchart illustrating a carrier measurement method according to an embodiment of the present disclosure, applied to a terminal. As shown in FIG. 3B, the embodiments of the present disclosure relate to a carrier measurement method, which includes:

**Step S3201:** For different types of carriers, the terminal performs measurement according to a first measurement manner to obtain a measurement result.

The optional implementation of step S3201 can be found in step S2105 of FIG. 2, step S3103 of FIG. 3A, and other related parts in the embodiments involved in FIGs. 2 and 3A, which will not be repeated here.

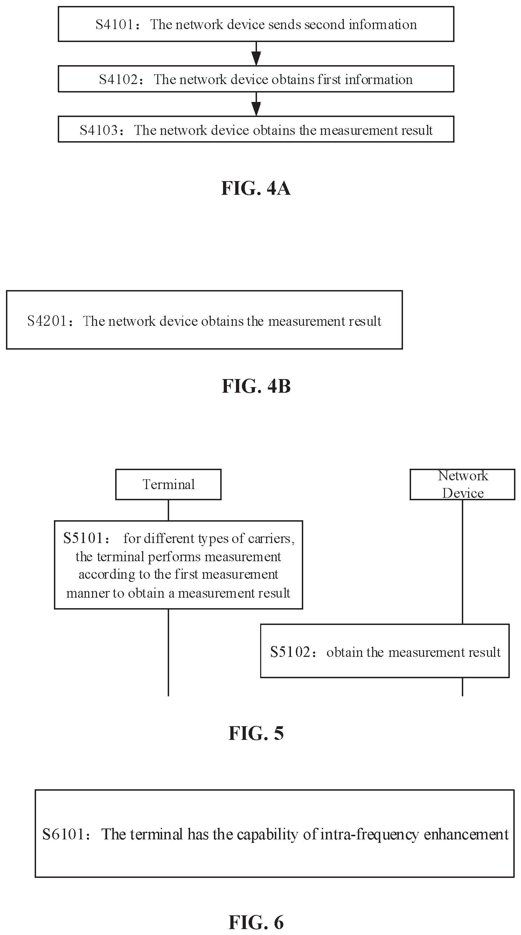

FIG. 4A is a schematic flowchart illustrating a carrier measurement method according to an embodiment of the present disclosure, applied to a network device. As shown in FIG. 4A, the present disclosure relates to a carrier measurement method, which includes:

**Step S4101:** The network device sends second information.

The optional implementation of step S4101 can be found in step S2102 of FIG. 2 and other related parts in the embodiment involved in FIG. 2, which will not be repeated here.

**Step S4102:** The network device obtains first information.

The optional implementation of step S4102 can be found in step S2104 of FIG. 2 and other related parts in the embodiment involved in FIG. 2, which will not be repeated here.

**Step S4103:** The network device obtains the measurement result.

The carrier measurement method disclosed herein may include at least one of steps S4101 to S4103. For example, step S4101 may be implemented as an independent embodiment, step S4102 may be implemented as an independent embodiment, and step S4103 may be implemented as an independent embodiment, but is not limited thereto.

In some embodiments, step S4101 is optional, and one or more of these steps may be omitted or substituted in different embodiments.

In some embodiments, step S4102 is optional, and one or more of these steps may be omitted or substituted in different embodiments.

In some embodiments, step S4103 is optional, and one or more of these steps may be omitted or substituted in different embodiments.

FIG. 4B is a flowchart illustrating a carrier measurement method according to an embodiment of the present disclosure, applied to a network device. As shown in FIG. 4B, the present disclosure relates to a carrier measurement method, which includes:

**Step S4201:** The network device obtains the measurement result.

The optional implementation of step S4201 can be found in step S2106 in FIG. 2, step S4103 in FIG. 4A, and other related parts in the embodiments involved in FIGs. 2 and 4, which will not be repeated here.

In conjunction with some embodiments of the first aspect, in some embodiments, the frequency band is the FR2 band.

In conjunction with some embodiments of the first aspect, in some embodiments, the different types of carriers do not require measurement gap for measurement. Alternatively, the different types of carriers require measurement gap for measurement.

In conjunction with some embodiments of the first aspect, in some embodiments, the different types of carriers include at least two of the following:
a FR2 PSCC;
a FR2 PCC;
a FR2 SCC requiring neighbor cell measurement;
a FR2 SCC not requiring neighbor cell measurement;
a FR2 inter-frequency MO not requiring measurement gap; and
a FR2 inter-RAT MO not requiring measurement gap.

In conjunction with some embodiments of the first aspect, in some embodiments, the delay parameter is determined based on the number of first sampling points.

In conjunction with some embodiments of the first aspect, in some embodiments, the same frequency band in which the different types of carriers are located belongs to the FR2 band.

In conjunction with some embodiments of the first aspect, in some embodiments, the measurement result is obtained by the terminal measuring a first type of carrier among the different types of carriers, and the measurement result of the first type of carrier is used for the measurement results of the carrier other than the first type of carrier.

In conjunction with some embodiments of the first aspect, in some embodiments, the scaling factor of the first type of carrier is determined according to the first type, and the scaling factor is used to determine the delay for measuring the first type of carrier.

In conjunction with some embodiments of the first aspect, in some embodiments, the scaling factor of the first type is determined based on the first type and the priority of the first type, and the scaling factor is determined based on the number of carriers belonging to the first type.

In conjunction with some embodiments of the first aspect, in some embodiments, the scaling factor does not take into account carriers of a different type other than the first type.

In conjunction with some embodiments of the first aspect, in some embodiments, the measurement result is obtained based on the first type of carrier and measured according to the first measurement manner, where the first type of carrier among the different types of carriers is determined according to the communication scenario in which the terminal is currently located.

In conjunction with some embodiments of the first aspect, in some embodiments, the communication scenario includes at least one of the following:
an ED-DC scenario;
an SA scenario;
an NR-DC scenario; and
an NE-DC scenario.

In conjunction with some embodiments of the first aspect, in some embodiments, the method further includes:
receiving first information, the first information being used to indicate that the terminal supports measuring the carrier using the first measurement manner.

In conjunction with some embodiments of the first aspect, in some embodiments, the method further includes:
receiving second information, which is used to configure the different types of carriers.

FIG. 5 is a flowchart illustrating a carrier measurement method according to an embodiment of the present disclosure. As shown in FIG. 5, the present disclosure relates to a carrier measurement method, which includes:
**Step S5101:** For different types of carriers, the terminal performs measurements according to a first measurement manner to obtain a measurement result.
**Step S5102:** The network device obtains the measurement results.

The optional implementations of step S5101 can be found in step S2105 of FIG. 2, step S3103 of FIG. 3A, and other related parts in the embodiments described in FIGs. 2 and 3A, and will not be described in detail here.

The optional implementation of step S5102 can be found in step S2106 of FIG. 2, step S4103 of FIG. 4A, and other related parts in the embodiments involved in FIGs. 2 and 4A, which will not be repeated here.

In some embodiments, the above methods may include the methods of the embodiments described above on the communication system side, terminal side, network device side, etc., which will not be repeated here.

FIG. 6 is a schematic flowchart illustrating a carrier measurement method according to an embodiment of the present disclosure. As shown in FIG. 6, the present disclosure relates to a carrier measurement method, which includes:
**Step S6101:** The terminal has the capability of intra-frequency enhancement.

In some embodiments, a UE supporting this capability may perform measurement on one CC in an FR2 band, and use the measurement result to enhance measurement of other CCs configured in the same band. This may be understood as: (i) using the measurement result of one CC as the measurement result of other CCs in the band; or (ii) reducing the number of sampling points for measurement of other CCs in the band.

In some embodiments, the UE reports the capability information to the network.

In some embodiments, the network delivers measurement configuration (existing behavior).

In some embodiments, the UE determines CSSF_{outside_gap,i} and CSSF_{withingap,i} based on the measurement configuration of the network.

For CCs in an NR FR2 band, measurement is performed only on one CC within the band, and the measurement result of the CC represents the measurement results of all configured CCs in the band. That is, the protocol-defined CSSF_{outside_gap,i} and CSSF_{withingap,i} do not take into account FR2 CCs other than the measured CC in the band.

The specific modification scheme is as follows:
In an EN-DC scenario, if the CC on which the FR2 MO to be measured is located is in the same frequency band as the FR2 PSCC, the CSSF does not take the FR2 MO into account; otherwise, if the CC on which the FR2 MO to be measured is located is in the same frequency band as the FR2 SCC requiring neighbor cell measurement, the CSSF does not take the FR2 MO into account.

In an SA scenario, if the CC on which the FR2 MO to be measured is located is in the same frequency band as the FR2 PCC, the CSSF does not take the FR2 MO into account; otherwise, if the CC on which the FR2 MO to be measured is located is in the same frequency band as the FR2 SCC requiring neighbor cell measurement, the CSSF does not take the FR2 MO into account.

In an NR-DC scenario, if the CC on which the FR2 MO to be measured is located is in the same frequency band as the FR2 PSCC, the CSSF does not take the FR2 MO into account.

In an NE-DC scenario, if the CC on which the FR2 MO to be measured is located is in the same frequency band as the FR2 PSCC, the CSSF does not take the FR2 MO into account; otherwise, if the CC on which the FR2 MO to be measured is located is in the same frequency band as the FR2 SCC requiring neighbor cell measurement, the CSSF does not take the FR2 MO into account.

Based on the determined CSSF values, NR neighbor cell measurement delay indicators are determined, including a primary synchronization signal (PSS) or secondary synchronization signal (SSS) detection period, a time index detection period, and a measurement delay period.

**As Embodiment 2 (corresponding to scenario (ii)):**
In some embodiments, the UE reports the capability information to the network.

In some embodiments, the network delivers measurement configuration (existing behavior).

In some embodiments, the UE determines, based on the measurement configuration of the network, that multiple CCs to be measured belong to the FR2 band.

In an EN-DC scenario, if the CC on which the FR2 MO to be measured is located is in the same frequency band as the FR2 PSCC, a specific number of sampling points may be used to perform measurement for the FR2 MO; otherwise, if the CC on which the FR2 MO to be measured is located is in the same frequency band as the FR2 SCC requiring neighbor cell measurement, a specific number of sampling points may be used to perform measurement for the FR2 MO.

In an SA scenario, if the CC on which the FR2 MO to be measured is located is in the same frequency band as the FR2 PCC, a specific number of sampling points may be used to perform measurement for the FR2 MO; otherwise, if the CC on which the FR2 MO to be measured is located is in the same frequency band as the FR2 SCC requiring neighbor cell measurement, a specific number of sampling points may be used to perform measurement for the FR2 MO.

In an NR-DC scenario, if the CC on which the FR2 MO to be measured is located is in the same frequency band as the FR2 PSCC, a specific number of sampling points may be used to perform measurement for the FR2 MO.

In an NE-DC scenario, if the CC on which the FR2 MO to be measured is located is in the same frequency band as the FR2 PSCC, a specific number of sampling points may be used to perform measurement for the FR2 MO; otherwise, if the CC on which the FR2 MO to be measured is located is in the same frequency band as the FR2 SCC requiring neighbor cell measurement, a specific number of sampling points may be used to perform measurement for the FR2 MO.

In the embodiments disclosed herein, some or all of the steps and their optional implementations may be arbitrarily combined with some or all of the steps in other embodiments, or may be arbitrarily combined with the optional implementations in other embodiments.

This disclosure also provides an apparatus for implementing any of the above methods. For example, an apparatus is provided that includes units or modules for implementing the steps performed by the terminal in any of the above methods. Alternatively, another apparatus is provided that includes units or modules for implementing the steps performed by a network device (e.g., an access network device, a core network functional node, a core network device, etc.) in any of the above methods.

It should be understood that the division of the various units or modules in the above-mentioned apparatus is merely a division of logical functions. In actual implementation, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor may be, for example, a general-purpose processor, such as a central processing unit (CPU) or a microprocessor, and the memory may be internal to the apparatus or external to the apparatus. Alternatively, the units or modules in the apparatus may be implemented in the form of hardware circuits, and the functions of some or all of the units or modules may be realized by designing the hardware circuits. The hardware circuits may be understood as one or more processors. For example, in one implementation, the hardware circuits may be an application-specific integrated circuit (ASIC), and the functions of some or all of the units or modules may be realized by designing the logical relationships between the components within the circuits. In another implementation, the hardware circuits may be implemented by programmable logic devices (PLDs), such as field programmable gate arrays (FPGAs), which may include a large number of logic gate circuits. The connections between the logic gate circuits may be configured through configuration files, thereby realizing the functions of some or all of the units or modules. All units or modules of the above devices may be implemented entirely by a processor calling software, entirely by hardware circuits, or partially by a processor calling software, with the remainder implemented by hardware circuits.

In the embodiments of the present disclosure, a processor is a circuit with signal processing capabilities. In one implementation, the processor can be a circuit with capabilities of reading and executing instructions, such as a central processing unit (CPU), a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented as an application-specific integrated circuit (ASIC) or a programmable logic device (PLD), such as an FPGA. In a reconfigurable hardware circuit, the process of the processor loading a configuration file and implementing hardware circuit configuration can be understood as the process of the processor loading instructions to implement the functions of some or all of the above units or modules. Furthermore, the processor can also be a hardware circuit designed for artificial intelligence, which can be understood as an ASIC, such as a neural network processing unit (NPU), a tensor processing unit (TPU), a deep learning processing unit (DPU), etc.

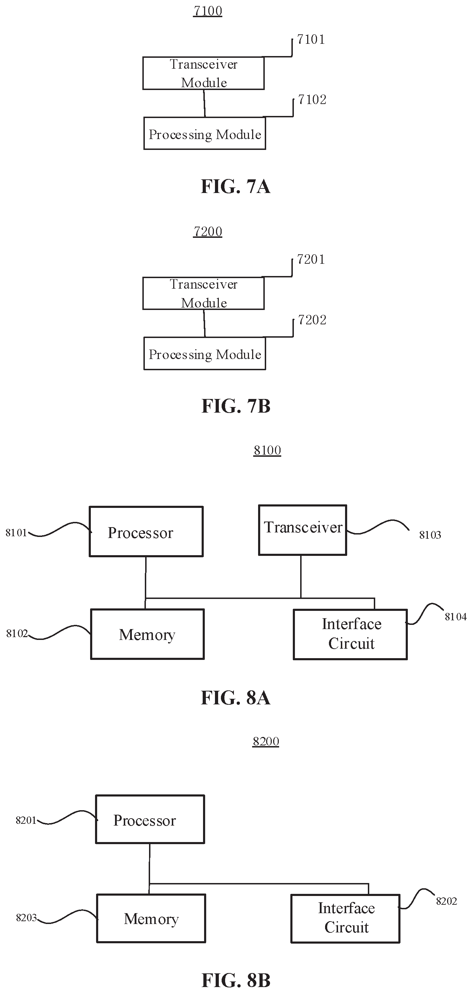

FIG. 7A is a schematic diagram of the terminal structure proposed in an embodiment of this disclosure. As shown in FIG. 7A, the terminal 7100 may include at least one of a transceiver module 7101, a processing module 7102, etc. In some embodiments, the processing module 7102 is used to perform measurements on different types of carriers according to a first measurement manner to obtain a measurement result; where the different types of carriers are located in the same frequency band, and the first measurement manner includes measuring a first type of carrier among the different types of carriers, or reducing the number of sampling points for carriers other than the first type of carrier. Optionally, the transceiver module is used to perform at least one of the communication steps (such as step S2101, but not limited to) performed by the terminal 7100 in any of the above methods, which will not be described in detail here. Optionally, the processing module is used to perform at least one of the other steps performed by the terminal 7100 in any of the above methods, which will not be described in detail here.

Optionally, the processing module 7102 is used to perform at least one of the communication steps, such as the processing performed by the terminal in any of the above methods, which will not be described in detail here.

FIG. 7B is a schematic diagram of the network device proposed in an embodiment of this disclosure. As shown in FIG. 7B, the network device 7200 may include at least one of a transceiver module 7201, a processing module 7202, etc. In some embodiments, the transceiver module 7201 is used to obtain the measurement result, which are obtained by a terminal measuring different types of carriers according to a first measurement manner; where the different types of carriers are located in the same frequency band, and the first measurement manner includes measuring a first type of carrier among the different types of carriers, or reducing the number of sampling points for carriers other than the first type of carrier. Optionally, the transceiver module is used to perform at least one of the communication steps such as sending and/or receiving performed by the network device 7200 in any of the above methods (e.g., step S2104, but not limited thereto), which will not be described in detail here.

Optionally, the processing module 7202 is used to perform at least one of the communication steps, such as the processing performed by the network device in any of the above methods, which will not be described in detail here.

In some embodiments, the transceiver module may include a transmitting module and/or a receiving module, which may be separate or integrated. Optionally, the transceiver module may be interchangeable with a transceiver.

In some embodiments, the processing module may be a single module or may include multiple sub-modules. Alternatively, the multiple sub-modules may each perform all or part of the steps required by the processing module. Alternatively, the processing module may be interchangeable with a processor.

FIG. 8A is a schematic diagram of the structure of the communication device 8100 proposed in an embodiment of this disclosure. The communication device 8100 can be a network device (e.g., access network device, core network device, etc.), a terminal (e.g., user equipment, etc.), a chip, chip system, or processor that supports the network device in implementing any of the above methods, or a chip, chip system, or processor that supports the terminal in implementing any of the above methods. The communication device 8100 can be used to implement the methods described in the above method embodiments; for details, please refer to the descriptions in the above method embodiments.

As shown in FIG. 8A, the communication device 8100 includes one or more processors 8101. The processor 8101 can be a general-purpose processor or a dedicated processor, such as a baseband processor or a central processing unit (CPU). The baseband processor can be used to process communication protocols and communication data, while the CPU can be used to control communication devices (e.g., base stations, baseband chips, terminal devices, terminal device chips, DUs or CUs, etc.), execute programs, and process program data. The communication device 8100 is used to execute any of the above methods.

In some embodiments, the communication device 8100 further includes one or more memories 8102 for storing instructions. Alternatively, all or part of the memories 8102 may also be located outside the communication device 8100.

In some embodiments, the communication device 8100 further includes one or more transceivers 8103. When the communication device 8100 includes one or more transceivers 8103, the transceivers 8103 perform at least one of the communication steps such as sending and/or receiving in the above method (e.g., steps S2101, S2102, S2103, S2104, but not limited thereto).

In some embodiments, a transceiver may include a receiver and/or a transmitter, which may be separate or integrated. Alternatively, the terms transceiver, transceiver unit, transceiver device, and transceiver circuit may be used interchangeably; the terms transmitter, transmitting unit, transmitter device, and transmitting circuit may be used interchangeably; and the terms receiver, receiving unit, receiver device, and receiving circuit may be used interchangeably.

In some embodiments, the communication device 8100 may include one or more interface circuits 8104. Alternatively, the interface circuit 8104 is connected to the memory 8102, and the interface circuit 8104 can be used to receive signals from the memory 8102 or other devices, and can be used to send signals to the memory 8102 or other devices. For example, the interface circuit 8104 can read instructions stored in the memory 8102 and send the instructions to the processor 8101.

The communication device 8100 described in the above embodiments may be a network device or a terminal, but the scope of the communication device 8100 described in this disclosure is not limited thereto, and the structure of the communication device 8100 may not be limited by FIG. 8A. The communication device may be a standalone device or may be part of a larger device. For example, the communication device may be: 1) an independent integrated circuit IC, or a chip, or a chip system or subsystem; (2) a collection of one or more ICs, alternatively, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; and (6) others, etc.

FIG. 8B is a schematic diagram of the structure of the chip 8200 proposed in an embodiment of this disclosure. For cases where the communication device 8100 can be a chip or a chip system, please refer to the schematic diagram of the chip 8200 shown in FIG. 8B, but it is not limited thereto.

The chip 8200 includes one or more processors 8201, which are used to perform any of the above methods.

In some embodiments, the chip 8200 further includes one or more interface circuits 8202. Alternatively, the interface circuit 8202 is connected to memory 8203, and the interface circuit 8202 can be used to receive signals from memory 8203 or other devices, and the interface circuit 8202 can be used to send signals to memory 8203 or other devices. For example, the interface circuit 8202 can read instructions stored in memory 8203 and send the instructions to processor 8201.

In some embodiments, the interface circuit 8202 performs at least one of the communication steps such as sending and/or receiving in the above method, and the processor 8201 performs at least one of the other steps.

In some embodiments, the terms interface circuit, interface, transceiver pin, transceiver, etc., can be used interchangeably.

In some embodiments, the chip 8200 further includes one or more memories 8203 for storing instructions. Alternatively, all or part of the memories 8203 may be located outside of the chip 8200.

This disclosure also proposes a storage medium storing instructions that, when executed on a communication device 8100, cause the communication device 8100 to perform any of the above methods. Alternatively, the storage medium is an electronic storage medium. Alternatively, the storage medium is a computer-readable storage medium, but not limited thereto; it may also be a storage medium readable by other devices. Alternatively, the storage medium may be a non-transitory storage medium, but not limited thereto; it may also be a temporary storage medium.

This disclosure also provides a program product that, when executed by the communication device 8100, causes the communication device 8100 to perform any of the above methods. Alternatively, the program product is a computer program product.

This disclosure also proposes a computer program that, when run on a computer, causes the computer to perform any of the above methods.

## Claims

1. A carrier measurement method, the method is executed by a terminal, the method comprising:
performing measurement on different types of carriers according to a first measurement manner to obtain a measurement result;
wherein the different types of carriers are located in a same frequency band, and the first measurement manner comprises measuring a first type of carrier among the different types of carriers; and
wherein the measurement result of the first type of carrier is used to determine the measurement result of a carrier other than the first type of carrier, or the carrier other than the first type of carrier is measured according to a delay parameter, wherein the delay parameter is used to indicate a delay requirement for carrier measurement, and the delay parameter is less than a value agreed upon in a communication protocol.

2. The method according to claim 1, wherein the delay parameter is determined based on a number of first sampling points.

3. The method according to claim 1, wherein the different types of carriers are located in the same frequency band belonging to a frequency range 2 (FR2) band.

4. The method according to any one of claims 1 to 3, wherein the different types of carriers comprise at least two of the following:
a FR2 primary secondary component carrier (PSCC);
a FR2 primary component carrier (PCC);
a FR2 secondary component carrier (SCC) requiring neighbor cell measurement;
a FR2 SCC not requiring neighbor cell measurement;
an inter-frequency measurement object (MO) not requiring measurement gap in FR2; and
an inter-radio access technology (inter-RAT) MO not requiring measurement gap in FR2.

5. The method according to claim 4, wherein the method further comprises:
determining a scaling factor for the first type of carrier based on the first type, and the scaling factor is used to determine a delay for measuring the first type of carrier.

6. The method according to claim 5, wherein determining the scaling factor of the first type of carrier according to the first type comprises:
determining the scaling factor for the first type of carrier based on the first type and a priority of the first type, wherein the scaling factor is determined based on a number of carriers belonging to the first type.

7. The method according to claim 5 or 6, wherein the scaling factor does not take into account a carrier of a different type other than the first type.

8. The method according to any one of claims 1 to 7, wherein performing measurement on different types of carriers according to the first measurement manner to obtain the measurement result comprises:
determining the first type of carrier among the different types of carriers based on a current communication scenario of the terminal; and
performing measurement on the first type of carrier according to the first measurement manner to obtain the measurement result.

9. The method according to claim 8, wherein the communication scenario comprises at least one of the following:
a scenario of evolved universal terrestrial radio access (E-UTRA)-new radio (NR) dual connectivity (ED-DC);
a scenario of standalone (SA);
a scenario of new radio (NR) dual connectivity (NR-DC); and
a scenario of NR-E-UTRA dual connectivity (NE-DC).

10. The method according to any one of claims 1 to 9, wherein the method further comprises:
sending first information to a network device, the first information being configured to indicate that the terminal supports performing measurement on the first type of carrier according to the first measurement manner.

11. The method according to any one of claims 1 to 11, wherein the method further comprises:
receiving second information sent by a network device, the second information being configured to configure the different types of carriers.

12. A carrier measurement method, executed by a network device, the method comprising:
obtaining a measurement result, obtained by a terminal measuring different types of carriers according to a first measurement manner, wherein the different types of carriers are located in a same frequency band, and the first measurement manner includes measuring a first type of carrier among the different types of carriers; and
wherein the measurement result of the first type of carrier is used to determine the measurement result of a carrier other than the first type of carrier, or the carrier other than the first type of carrier is measured according to a delay parameter, wherein the delay parameter is used to indicate a delay requirement for carrier measurement, and the delay parameter is less than a value agreed upon in a communication protocol.

13. The method according to claim 13, wherein the delay parameter is determined based on a number of first sampling points.

14. The method according to claim 13, wherein the different types of carriers are located in the same frequency band belonging to a FR2 band.

15. The method according to any one of claims 12 to 14, wherein the different types of carriers comprise at least two of the following:
a FR2 PSCC;
a FR2 PCC;
a FR2 SCC requiring neighbor cell measurement;
a FR2 SCC not requiring neighbor cell measurement;
an inter-frequency MO not requiring measurement gap in FR2; and
an inter-RAT MO not requiring measurement gap in FR2.

16. The method according to claim 15, wherein:
a scaling factor for the first type of carrier is determined based on the first type, and the scaling factor is used to determine a delay for measuring the first type of carrier.

17. The method according to claim 16, wherein:
the scaling factor for the first type of carrier is determined based on the first type and a priority of the first type, wherein the scaling factor is determined based on a number of carriers belonging to the first type.

18. The method according to claim 16 or 17, wherein the scaling factor does not take into account a carrier of a different type other than the first type.

19. The method according to any one of claims 12 to 18, wherein the measurement result is obtained by performing measurement on the first type of carrier according to the first measurement manner, and the first type of carrier among the different types of carriers is determined based on a current communication scenario of the terminal.

20. The method according to claim 19, wherein the communication scenario comprises at least one of the following:
a scenario of ED-DC;
a scenario of SA;
a scenario of NR-DC; and
a scenario of NE-DC.

21. The method according to any one of claims 12 to 20, wherein the method further comprises:
receiving first information sent by the terminal, the first information being configured to indicate that the terminal supports performing measurement on the first type of carrier according to the first measurement manner.

22. The method according to any one of claims 12 to 21, wherein the method further comprises:
sending second information to the terminal, the second information being configured to configure the different types of carriers.

23. A carrier measurement method, comprising:
performing measurement on different types of carriers according to a first measurement manner to obtain a measurement result;
wherein the different types of carriers are located in a same frequency band, and the first measurement manner comprises measuring a first type of carrier among the different types of carriers; and
wherein the measurement result of the first type of carrier is used to determine the measurement result of a carrier other than the first type of carrier, or the carrier other than the first type of carrier is measured according to a delay parameter, wherein the delay parameter is used to indicate a delay requirement for carrier measurement, and the delay parameter is less than a value agreed upon in a communication protocol; and
acquiring, by a network device, the measurement result.

24. A terminal, comprising:
a processing module, configured to perform measurement on different types of carriers according to a first measurement manner to obtain a measurement result;
wherein the different types of carriers are located in a same frequency band, and the first measurement manner comprises measuring a first type of carrier among the different types of carriers; and
wherein the measurement result of the first type of carrier is used to determine the measurement result of a carrier other than the first type of carrier, or the carrier other than the first type of carrier is measured according to a delay parameter, wherein the delay parameter is used to indicate a delay requirement for carrier measurement, and the delay parameter is less than a value agreed upon in a communication protocol.

25. A network device, comprising:
a transceiver module, configured to obtain a measurement result, obtained by a terminal measuring different types of carriers according to a first measurement manner, wherein the different types of carriers are located in a same frequency band, and the first measurement manner includes measuring a first type of carrier among the different types of carriers; and
wherein the measurement result of the first type of carrier is used to determine the measurement result of a carrier other than the first type of carrier, or the carrier other than the first type of carrier is measured according to a delay parameter, wherein the delay parameter is used to indicate a delay requirement for carrier measurement, and the delay parameter is less than a value agreed upon in a communication protocol.

26. A terminal, comprising:
one or more processors;
wherein, the terminal is configured to execute the carrier measurement method according to any one of claims 1 to 11.

27. A network device, comprising:
one or more processors;
wherein, the network device is configured to execute the carrier measurement method according to any one of claims 12 to 22.

28. A communication system, comprising a terminal and a network device, wherein the terminal is configured to implement the carrier measurement method according to any one of claims 1 to 11, and the network device is configured to implement the carrier measurement method according to any one of claims 12 to 22.

29. A storage medium storing instructions, wherein when the instructions are executed on a communication device, the communication device performs the carrier measurement method according to any one of claims 1 to 11, or performs the carrier measurement method according to any one of claims 12 to 22.
